Europäisches Patentamt

European Patent Office

Office européen des brevets

(11) Numéro de publication: **0 031 737**
**A1**

(12) **DEMANDE DE BREVET EUROPEEN**

(21) Numéro de dépôt: **80401596.4**

(22) Date de dépôt: **07.11.80**

(51) Int. Cl.³: **B 64 C 25/36**

(30) Priorité: **13.11.79 FR 7927878**

(43) Date de publication de la demande: **08.07.81**
**Bulletin 81/27**

(84) Etats contractants désignés: **DE GB IT**

(71) Demandeur: **MESSIER-HISPANO-BUGATTI (S.A), 5, rue Louis Lejeune, F-92120 Montrouge (FR)**

(72) Inventeur: **Masclet, Jean, 11, boulevard Davout, F-75020 Paris (FR)**
Inventeur: **Papay, Roger, 5, rue Charles Péguy, F-92340 Bourg La Reine (FR)**

(74) Mandataire: **Flavenot, Bernard, Société S.E.D.I.C. 40 rue Victor Basch, F-92120 Montrouge (FR)**

(54) **Fusible pour roue équipée de pneumatique.**

(57) La présente invention concerne un fusible pour roue équipée de pneumatique.

Le fusible est constitué sous la forme d'une vis (1) dont la tête (7) est traversée par un conduit (3) d'évacuation recevant un clapet (8) obturant ce conduit (3); le fusible se caractérise par le fait qu'il comporte une goupille (17) dont une partie est encastrée dans la tête et une autre partie coopère avec le clapet pour le maintenir.

Application aux roues d'aéronefs.

FUSIBLE POUR ROUE EQUIPEE DE PNEUMATIQUE

1

La présente invention concerne les fusibles pour les roues équipées de pneumatique et plus particulièrement sur les aéronefs.

On sait qu'il existe déjà des dispositifs de sécurité qui sont montés sur les roues d'aéronefs et qui ont essentiellement pour fonction d'empêcher que la pression dans les pneumatiques s'élève à des pressions trop élevées pouvant entraîner des explosions. Ces augmentations de pression peuvent être par exemple consécutives à un freinage important quand le décollage de l'aéronef ne peut avoir lieu au dernier instant, ce qui augmente considérablement la température des pneumatiques et donc la pression du fluide contenu dans les pneumatiques.

Les dispositifs de sécurité connus sont constitués par des clapets bi-stables dont l'organe obturateur est maintenu contre son siège par un bouchon de matériau eutectique qui fond à une certaine température et dont une partie fondue est évacuée par des orifices pratiqués dans la tête du clapet.

On a constaté que ces dispositifs ne donnent pas de bons résultats car la partie fondue de l'eutectique, passant par les orifices, se solidifie au niveau des orifices et empêche tout coulage ou fluage supplémentaire du bouchon d'eutectique. La conséquence est que l'organe obturateur n'a pas un déplacement suffisant pour permettre l'évacuation nécessaire du fluide de gonflage du pneumatique, et ce dernier peut alors exploser.

La présente invention a pour but de pallier ces inconvénients et de réaliser un fusible de roue permettant d'obtenir l'évacuation du fluide de gonflage du pneumatique de la roue de façon suffisante et en toute sécurité.

Plus précisément, la présente invention a pour objet un fusible pour roue équipée de pneumatique comportant une tête traversée par un conduit d'évacuation, un clapet obturant ledit conduit et apte à recevoir la pression dudit pneumatique, des moyens pour empêcher le déplacement dudit clapet, caractérisé par le fait que lesdits moyens sont constitués par une goupille dont une partie est encastrée dans ladite tête et une autre partie coopère avec ledit clapet pour le maintenir, ladite goupille étant apte à se briser sous l'action d'une force à partir d'une certaine valeur.

L'invention sera mieux comprise à l'aide de l'exemple de réalisation décrit ci-après, à titre d'exemple non limitatif, en référence aux figures annexées dans lesquelles :

- la figure 1 représente, en coupe axiale et à une échelle agrandie, un mode avantageux de réalisation d'un fusible thermique tel qu'il est monté sur la roue, lorsque la température dans l'enveloppe du pneumatique est normale.

- la figure 2 représente, dans la même configuration, le même mode de réalisation du fusible selon la figure 1, mais après avoir réalisé sa fonction, c'est-à-dire après que la température critique ait été atteinte.

Le fusible comporte essentiellement un corps traversé par un conduit, obturé par un clapet qui est maintenu en place notamment par un système de goupille qui

0031737

3

l'empêche de se déplacer quand la pression est appliquée sur le piston. Par contre, cette goupille ayant un coefficient de résistance déterminée, qui est réalisée en un matériau fait qu'il se brise à partir d'une certaine valeur de force.

Ainsi, quand la pression sur le clapet augmente et dépasse une certaine valeur de seuil qui correspond sur la goupille à une force supérieure à celle que ne peut supporter le matériau, celui-ci se brise et le clapet est déplacé pour laisser passer le fluide, notamment du pneumatique.

Ceci est important pour éviter des éclatements notamment pour les pneumatiques d'aéronefs.

Par contre, on sait que lorsque la pression dans un pneumatique augmente, la température en fait de même, et pour favoriser la brisure de la goupille, le matériau de celle-ci est choisi par exemple dans la catégorie des eutectiques, comme par exemple un alliage plomb-étain, ou cadmium-étain. Ainsi, comme le fusible est monté à proximité du pneumatique, il prend sa température, et donc aussi la goupille qui s'échauffe et par conséquent la valeur de son coefficient de résistance diminue ce qui favorise sa brisure sous la pression du clapet.

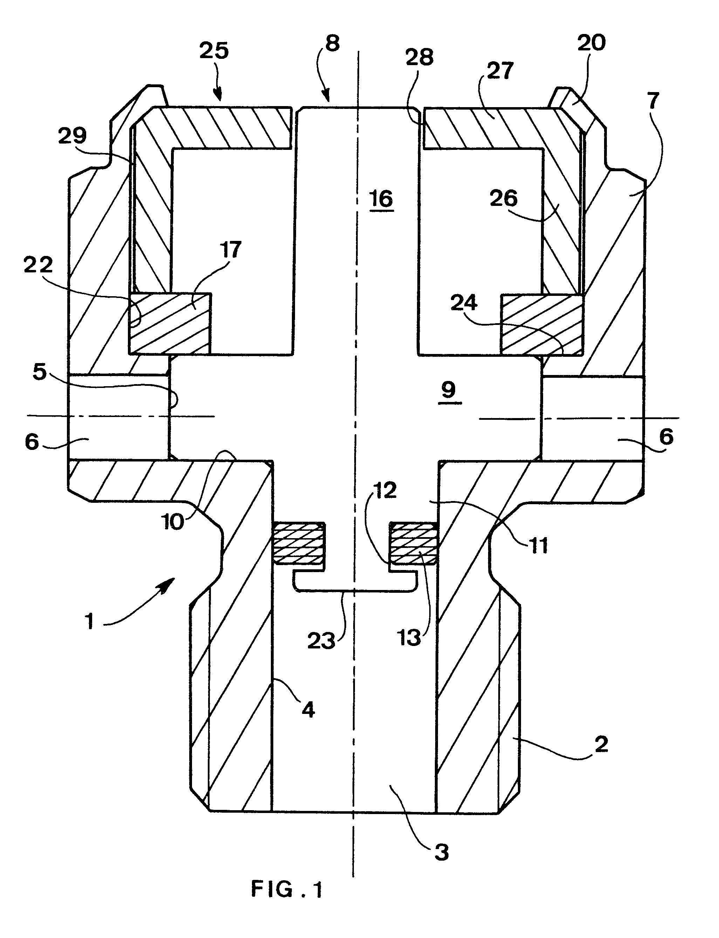

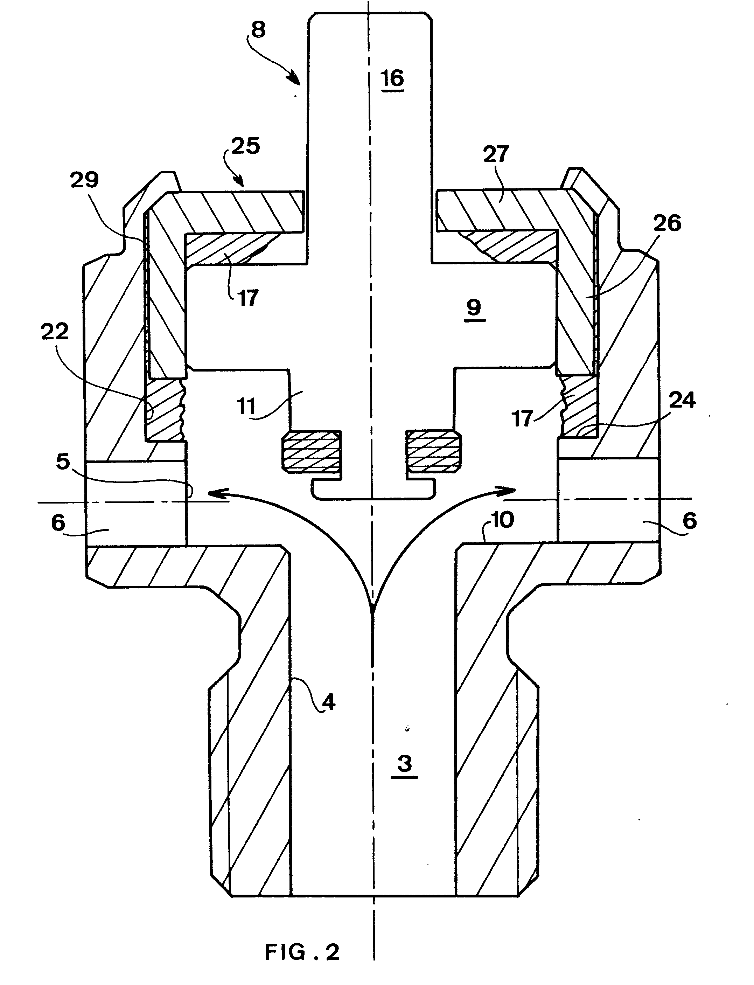

Les figures 1 et 2 représentent un mode de réalisation préféré d'un fusible pour roue équipée de pneumatique, notamment pour aérodynes.

Ce fusible est constitué d'une vis 1, dont la tige filetée 2 se fixe sur la jante de la roue, non représentée sur les figures. Cette vis 1 est percée d'un canal central 3 se présentant sous la forme de trois passages de sections différentes, un passage de petite

4

section 4 ou premier passage, un passage de moyenne section 5 ou deuxième passage et un passage de grande section 22 ou troisième passage. Des passages latéraux 6, au nombre de quatre, disposés à 90° l'un par rapport à l'autre, sont pratiqués dans la tête 7 de la vis 1 et débouchent dans le deuxième passage 5.

A l'intérieur du canal central 3 est disposé un piston différentiel 8 puisqu'il présente deux parties de sections différentes, correspondant à celles des premier et deuxième passages 4 et 5 de la vis 1, à savoir une partie de grande section 9, coulissant dans le passage 5 et venant s'appuyer sur un épaulement 10 formé par le changement de section des premier et second passages 4 et 5, et une partie de petite section 11, coulissant dans le premier passage 4, et dans laquelle est pratiquée une gorge 12, recevant un joint d'étanchéité 13 de section rectangulaire, empêchant l'air contenu dans le pneumatique de s'échapper par les passages latéraux 6, lorsque la température critique n'est pas atteinte ; cette partie 11 se termine, vers la chambre d'air, par une face plane 23, perpendiculaire à l'axe du piston 8, et à proximité de la gorge 12 recevant le joint 13. Quant à la partie de grande section 9 du piston 8, elle se prolonge d'une tige centrale 16, s'étendant à l'intérieur du troisième passage 22 de la tête 7, lequel passage 22 reçoit la goupille réalisée par une charge de matière eutectique, réalisée sous forme d'un disque annulaire 17 se centrant à l'intérieur de ce troisième passage 22, et s'appuyant à la fois sur un épaulement 24, formé par le changement de section entre le second et le troisième passage, ainsi que sur la face de grande section 9 du piston 8 tourné vers le troisième passage 22, et, d'autre part, une entretoise 25, constituée d'une paroi latérale 26 cylindrique, obturée à l'une de ses extrémités par un fond 27 dans lequel est pratiqué un alésage 28 recevant la tige centrale 16 du piston 8, la paroi latérale cylindrique 26 venant s'adosser par son autre extrémité sur le disque annulaire 17 ; un jeu 29 est pratiqué entre la paroi cylindrique 26 et l'alésage du troisième passage 22, et le disque 17 ainsi que l'entretoise 25 sont maintenus en translation dans le troisième passage 22 par sertissage du bord supérieur 20 de la tête 7 sur l'entretoise 25.

En référence à la figure 2, lorsque la température de l'air sous pression contenu dans le pneumatique atteint la température critique, soit, par exemple, 183°C, et le disque annulaire 17 étant réalisé en un alliage eutectique plomb-étain, ou, selon un autre exemple, 176°C, et le disque annulaire 17 étant réalisé en un alliage eutectique cadmium-étain, le disque annulaire 17 fond, et, sous la pression régnant dans le pneumatique, le piston 8 est soulevé de l'épaulement 10, de sorte que sa partie de plus grande section 9 coulisse à l'intérieur de la paroi latérale 26 de l'entretoise 25, et entraîne avec elle une portion en fusion de l'alliage ayant constitué le disque annulaire 17. Dès que le joint 13 n'est plus reçu dans le premier passage 4, l'air sous pression s'échappe par les passages latéraux 6, c'est-à-dire par des voies différentes de celles empruntées par l'alliage eutectique en fusion, ayant constitué le disque annulaire 17, qui s'écoule, d'une part, à l'intérieur de la paroi latérale 26 de l'entretoise 25, et est amené, par la partie de plus grande section 9 du piston 8, contre le fond 27 de l'entretoise 25, et, d'autre part, dans le jeu 29 entre l'entretoise 25 et l'alésage du troisième passage 22. La tige centrale 16 du piston 8, dont l'extrémité libre est alors saillante hors du fond 27 de l'entretoise 25, facilite le guidage du piston 8 lors du déplacement de ce dernier, et fait simultanément office d'indicateur visuel et/ou tactile témoignant de l'état du fusible.

7

REVENDICATIONS

1/ Fusible pour roue équipée de pneumatique comportant une tête (7) traversée par un conduit (3) d'évacuation, un clapet (8) obturant ledit conduit (3) et apte à recevoir la pression dudit pneumatique, des moyens pour empêcher le déplacement dudit clapet, caractérisé par le fait que lesdits moyens sont constitués par une goupille (17) dont une partie est encastrée dans ladite tête (7) et une autre partie coopère avec ledit clapet (8) pour le maintenir, ladite goupille étant apte à se briser sous l'action d'une force à partir d'une certaine valeur.

2/ Fusible selon la revendication 1, caractérisé par le fait que ladite goupille (17) est réalisée en un matériau de résistance déterminée.

3/ Fusible selon la revendication 2, caractérisé par le fait que ledit matériau est un eutectique.

4/ Fusible selon la revendication 3, caractérisé par le fait que ledit eutectique est choisi dans la liste des alliages suivants : plomb-étain et cadmium-étain.

5/ Fusible selon l'une des revendications précédentes, caractérisé par le fait que ladite goupille (17) est encastrée dans ladite tête (7) en dehors dudit conduit (3) dans la paroi d'un logement (22) disposé latéralement audit conduit (3).

6/ Fusible selon la revendication 5, caractérisé par le fait que ledit clapet (8) est apte à coulisser dans ledit logement (22) entre deux positions correspondant respectivement à l'obturation et l'ouverture dudit conduit.

7/ Fusible selon la revendication 6, caracté-

8

risé par le fait que ledit clapet (8) comporte un
doigt (16) coopérant avec un orifice (28) réalisé
dans ledit logement (22) pour émerger de ladite tête
(7) quand ledit clapet (8) est en position ouverte
dudit conduit (3).

0031737

7

# R E V E N D I C A T I O N S

1/ Fusible pour roue équipée de pneumatique comprenant une tête (7) traversée par un conduit (3) d'évacuation, un clapet (8) obturant ledit conduit (3) et apte à recevoir la pression dudit pneumatique, une goupille (17) comportant au moins une partie encastrée dans ladite tête (7) et une autre partie coopérant avec ledit clapet (8) pour le retenir, ladite goupille étant apte à se briser sous l'action d'une force à partir d'une certaine valeur, caractérisé par le fait que ladite goupille (17) est encastrée dans ladite tête (7) en dehors dudit conduit (3) dans la paroi d'un logement (22) disposé latéralement audit conduit (3).

2/ Fusible selon la revendication 1, caractérisé par le fait que ladite goupille (17) est réalisée en un matériau de résistance déterminée.

3/ Fusible selon la revendication 2, caractérisé par le fait que ledit matériau est un eutectique.

4/ Fusible selon la revendication 3, caractérisé par le fait que ledit eutectique est choisi dans la liste des alliages suivants : plomb-étain et cadmium-étain.

5/ Fusible selon l'une des revendications 1 à 4, caractérisé par le fait que ledit clapet (8) est apte à coulisser dans ledit logement (22) entre deux positions correspondant respectivement à l'obturation et l'ouverture dudit conduit.

6/ Fusible selon la revendication 5, caractérisé par le fait que ledit clapet (8) comporte un doigt (16) coopérant avec un orifice (28) réalisé

8

dans ledit logement (22) pour émerger de ladite tête (7) quand ledit clapet (8) est en position ouverte dudit conduit (3).

FIG.1

2/2

0031737

FIG . 2

## DOCUMENTS CONSIDERES COMME PERTINENTS

| Catégorie | Citation du document avec indication, en cas de besoin, des parties pertinentes | Revendication concernée |
|---|---|---|
| X | US - A - 3 645 479 (KOSTROUN)<br>* Colonne 3, lignes 34-62; figures 2-4 * | 1,2,3,6 |
| X | FR - A - 1 416 695 (THE BENDIX)<br>* Page 1, colonne de droite, ligne 2 - page 2, colonne de gauche, ligne 7; figure 1 * | 1,3,6,7 |
| A | GB - A - 1 036 138 (THE BENDIX)<br>* Page 2, ligne 48 - page 3, ligne 2; figures 1,2 * | 1,3,7 |
| A | US - A - 2 817 349 (SEAVER)<br>* Colonne 3, lignes 11-48; figures 5,6 * | 3,4 |
| A | FR - A - 2 342 444 (DUNLOP)<br>* Page 5, ligne 27 - page 6, ligne 5; figure 1 * | 1,3 |
| A | US - A - 3 181 792 (CHANDLER)<br>* Colonne 2, ligne 1 - colonne 3, ligne 53, figure 2 * | 1,3 |

**CLASSEMENT DE LA DEMANDE (Int. Cl. 3)**

B 64 C 25/36

**DOMAINES TECHNIQUES RECHERCHES (Int. Cl. 3)**

B 60 C 23/
B 64 C 25/
F 16 K 17/

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 11-02-1981 | AYITER |

OEB Form 1503.1 06.78